# EUROPEAN PATENT APPLICATION

(11) **EP 1 315 375 A2**
(43) Date of publication of application: **28.05.2003**
(21) Application number: 02023407.6
(22) Date of filing: 18.10.2002
(51) Int. Cl.: H04N 7/16

(54) **Video segment targeting using remotely issued instructions as well as local and behavior information**

(30) Priority: 19.10.2001 US 1298
(71) Applicant: MICROSOFT CORPORATION, Redmond, WA 98052 (US)
(72) Inventor: Barrett, Peter T., San Francisco, CA 94117 (US)
(74) Representative: Grünecker, Kinkeldey, Stockmair & Schwanhäusser Anwaltssozietät

(57) **Abstract**

Video advertisement targeting based on local information accessible to the video receiver. This local information includes local state and user behavior characteristics that are relevant to the targeting of the video advertisements. A video receiver monitors and stores state and user behavior characteristic associated with the video receiver. In addition to the core content such a television program or a Web page sought by the viewer, the video receiver receives a number of video advertisements as well as targeting instructions from the video stream. The video receiver processes these instructions to select a relevant video advertisement based on the locally stored characteristics. Then, the video receiver displays the selected video segment.

## Description

### BACKGROUND OF THE INVENTION

### 1. Cross-Reference to Related Applications

The present invention is related to commonly-owned co-pending United States patent application serial number (attorney docket number 14531.96), filed on the same date herewith, and entitled "Advertising Using a Combination of Video and Banner Advertisements," which is incorporated herein by reference in its entirety.

### 2. The Field of the Invention

The present application relates generally to the field of the video processing. More particularly, the present invention relates to video segment targeting based on remotely issued targeting instructions and locally stored state and behavior information.

### 3. The Related Art

As we proceed further into the information age, more individuals have more convenient access to more information than ever before. One type of information is video information. The viewer can use a vast array of tools to select what video information she is interested in. Such tools include, for example, remote contro's, keyboards, and other convenient user interfaces. In addition, electronic program guides assist the viewer in choosing the video segments that are of most interest to the viewer.

One type of video segment is the video advertisement. Providers of video advertisements desire to maximize revenue by enticing the viewer to purchase the product or services offered by the provider. Hence, video advertisers are willing to provide desirable consideration to those able to display their video advertisements to viewers. While such advertising may sometimes seem bothersome to viewers, the presence of advertising often reduces the cost of the desired services offered by the service provider. For example, many television channels are free, since revenue from advertising alone is sufficient incentive to provide the television channels. Other the other hand, some premium channels present no advertisements, but instead achieve adequate incentives for providing the channel by charging the viewers a periodic fee.

The ability to target advertisement is of great value to advertisers. Targeting occurs by characterizing the segment of the population that is the most likely consumer of the product or service. Markets may be segmented by a myriad of characteristics such as gender, age, income, occupation, education level, special hobbies, geography, and so forth. By communicating the advertising using those mediums that are more likely to be seen by the target market segment, advertising is made more efficient.

For example, suppose a software developer manufactures a video game that tends to be attractive to men between 16 and 25 years old. In order to target the advertising to the most likely consumer, the software developer may place a video advertisement on a television channel that tends to have male viewers between the ages of 16 and 25. By targeting in this manner, advertisers increase the chance of revenue on a per viewer basis. In addition, viewers tend to find the advertising more relevant. Thus, advertisers and viewers both may benefit by targeted advertising.

Despite conventional efforts to target advertising, there are still viewers within the target market segment for which the targeted advertising has little relevance. For example, an advertisement for a certain premium channel is irrelevant to a viewer that has already subscribed to the premium channel. Also, a viewer may be presented with the same advertisement that she has recently seen. In additional, even though the viewer is within the target market, the viewer may not share the same interests as many in the target market. After all, not all males between the ages of 16 and 25 enjoy video games. Thus, even with targeted advertising, many viewers may still have little or no interest in the products or services advertised. Under conventional norms, this level of advertising misdirection is considered satisfactory in video advertising. Nevertheless, in light of the above, what is desired are methods, systems and computer products that improve video advertisement targeting.

### SUMMARY OF THE INVENTION

In accordance with the present invention, video segments (e.g., video advertisements) are targeted to individuals using remotely issued targeting instructions that set the criteria for determining whether or not a video receiver is to display a particular video advertisement. A video receiver follows the targeting instructions and uses local information accessible to the video receiver to determine whether or not to display the video advertisement. This local information is information such as local state and user behavior characteristics that are relevant to the targeting of video advertisements. Such information may include the channels that the user has subscribed to, the viewing history of the viewer on a time-wise basis, the last pay-per-view program ordered, a list of video advertisements already seen and when they were last seen, and so forth.

A video receiver monitors and stores the state and user behavior characteristic associated with the video receiver. In addition to the primary content desired by the viewer such a television program or a Web page, the video receiver receives a number of video advertisements as well as the targeting instructions from a video and/or data stream. The targeting instructions may be provided in a scripting language. The video receiver processes the targeting instructions to thereby select a relevant video advertisement based on the locally stored characteristics. Then, the selected video segment is displayed.

In this manner, video advertising may be targeted to a particular user of a particular video receiver. Furthermore, if desired, this targeting may be accomplished without the user necessarily disclosing any of the local state and user behavior characteristics outside of the video receiver, thereby preserving the privacy of the user. In addition, the criteria for determining whether the video advertisement is to be displayed may be remotely determined by, for example, the advertisers or broadcasters themselves.

For example, a premium channel provider may choose to display an advertisement for the premium channel to anyone with the only condition being that the localized information indicates that the user has not already subscribed to the premium channel. Thus, the video advertisement would be focused on individuals who have not already subscribed to the premium channel. As another example, an advertiser may desire to target individuals who are on-line or watch television between the hours of 5 p.m. and 8 p.m. on weeknights. The advertiser may indicate that the video advertisement is only to be displayed if the video advertisement has not already be displayed in the most recent week between the hours of 5 p.m. and 8 p.m. An additional condition may be that a user has not previously navigated to a particular web site that offers a conspicuous banner advertisement for the same product. In this manner, advertising may be focused to individuals based on information relevant to that individual.

Additional features and advantages of the invention will be set forth in the description, which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order that the manner in which the above-recited and other advantages and features of the invention are obtained, a more particular description of the invention briefly described above will be rendered by reference to specific embodiments thereof, which are illustrated, in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 illustrates an example video receiver that may be used to implement the principles of the present invention;

Figure 2 illustrates a suitable delivery system in which the present invention may operate;

Figure 3 illustrates a display screen associated with the video receiver in accordance with the present invention;

Figure 4 illustrates a flowchart of a method for targeting video advertising using remotely issued targeting instructions and localized state and behavior information in accordance with the present invention; and

Figure 5 illustrates a data flow and corresponding data structures used in implementing the method of Figure 4.

### DETAILED DESCRIPTION OF THE INVENTION

In accordance with the present invention, methods, systems and computer program products are described that target a number of video segments (e.g., advertisements) based on local information accessible to the video receiver. This local information is information such as local state and user behavior characteristics that are relevant to the targeting of the video advertisements. A video receiver monitors and stores state and user behavior characteristic associated with the video receiver. In addition to the core content such a television program or a Web page sought by the viewer, the video receiver receives a number of video advertisements as well as targeting instructions from the video and/or data stream. These instructions are processed by the video receiver to select a relevant video advertisement based on the locally stored characteristics. Then, the selected video segment is displayed. In this manner, video advertising may be targeted to a particular user of a particular video receiver.

The embodiments of the present invention may comprise a special purpose or general-purpose processing device or computer including various computer hardware components, as discussed in greater detail below. The embodiments may further comprise multiple computers linked in a networked environment. Set top boxes that enhance the capabilities of conventional televisions represent an example of a special purpose computer.

Embodiments within the scope of the present invention also include computer-readable media for carrying or having computer-executable instructions or data structures stored thereon. Such computer-readable media can be any available media that can be accessed by a general purpose or special purpose computer. By way of example, and not limitation, such computer-readable media can comprise physical storage media such as RAM, ROM, EEPROM, CD-ROM or other optical disk storage, magnetic disk storage or other magnetic storage devices, or any other medium that can be used to carry or store desired program code means in the form of computer-executable instructions or data structures and that can be accessed by a general purpose or special purpose computer.

When information is transferred or provided over a network or another communications connection (either hardwired, wireless, or a combination of hardwired or wireless) to a computer, the computer properly views the connection as a computer-readable medium. Thus, such a connection is also properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

The invention will be described in the general context of computer-executable instructions, such as program modules, being executed by set-top boxes or other computers. Generally, program modules include routines, programs, objects, components, data structures, etc. that perform particular tasks or implement particular abstract data types. The sequence of instructions implemented in a particular data structure or program module represents examples of corresponding acts for implementing the functions or steps described herein.

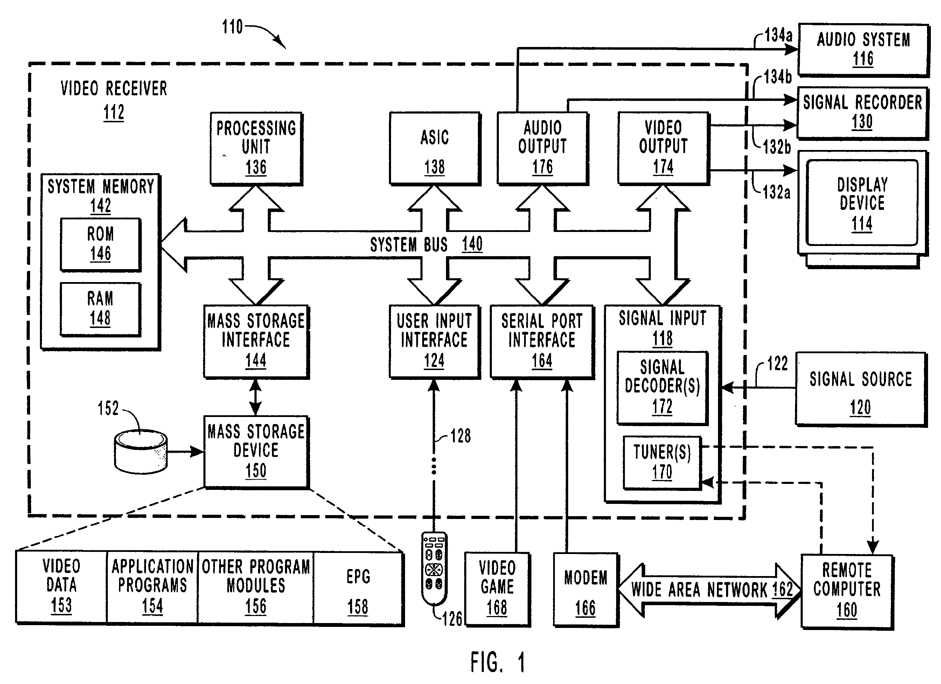

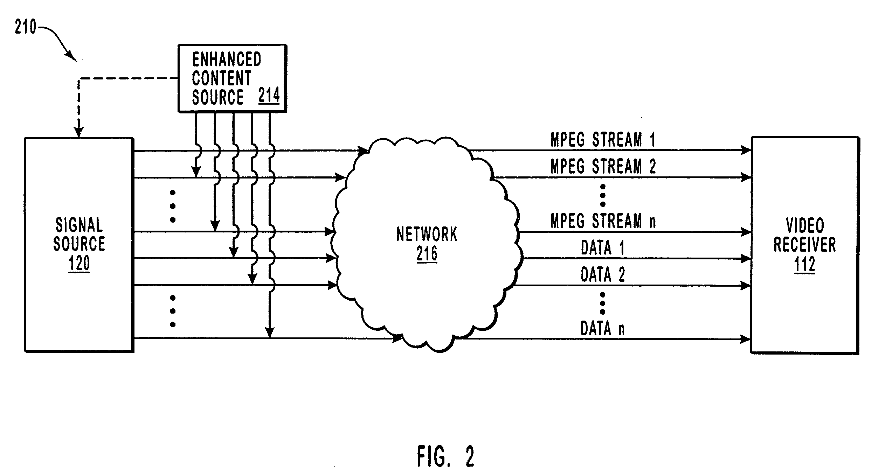

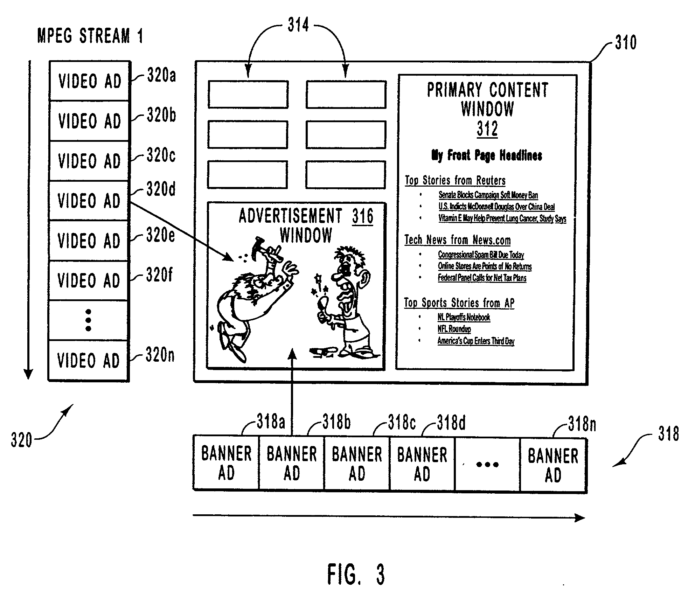

This description will proceed as follows. Figure 1 and the associated description will describe an example home entertainment system that may be used to implement the principles of the present invention. Figure 2 and the associated description will then describe a suitable system in which information is transmitted to a video receiver associated with the home entertainment system. Then, the detailed operation of the invention will be described with reference to Figure 3 through Figure 5.

Figure 1 and the corresponding discussion are intended to provide a general description of a suitable environment in which the invention may be implemented. In the description, reference is made to a video receiver that may be used for receiving and processing displayable content. In this description and in the claims, a "video receiver" may be any component or combination of components that is capable of processing video information. For example, the video receiver may be a set top box that has processing and memory capabilities. The video receiver may also be a computer system, a digital telephone, or the like.

In one embodiment, the present invention is implemented in a system that uses a conventional television screen or other display unit to display information and includes a WebTV® set-top box or a similar Internet terminal that has been adapted to perform the operations that include composing, sending and receiving email, browsing the World Wide Web ("Web"), accessing other segments of the Internet, and otherwise displaying information. An Internet terminal may use standard telephone lines, Integrated Services Digital Network (ISDN) lines, cable lines associated with cable television service, or the like to connect to the Internet or other wide area networks.

Figure 1 illustrates a home entertainment system 110 that includes a video receiver 112, a display device 114 and an audio system 116. Video receiver 112 may be a set-top box or Internet terminal that has been adapted to perform the operations disclosed herein. The display device 114 may be a high definition television display, a standard television display, a flat panel display, a projection device, a computer monitor, or any other device capable of displaying viewable data. Audio system 116 may be a speaker, a stereo system, or any device capable of emitting sound data.

Video receiver 112 includes a signal input 118, which receives programming from a signal source 120. The programming is transmitted from signal source 120 to signal input 118 via a programming input line 122, which can be a cable or optic connection, a terrestrial antenna system, a satellite system, or any device or system capable of transmitting programming to home entertainment system 110.

Video receiver 112 also includes a user input interface 124, which receives input from an input device 126, such as a remote control, external special purpose or general-purpose processing device or computer, keyboard, microphone, mouse, or any other device capable of generating electronic instructions for video receiver 112. Input device 126 is communicatively coupled to video receiver 112 over an input link 128 so as to enable such control. Input device 126 generates electronic instructions over input link 128 in response to preprogrammed data or in response to a viewer pressing buttons on input device 126. Input device 126 may also control Web browser software within video receiver 112 as when video receiver 112 is a set-top box or an Internet terminal that has been adapted to perform the operations disclosed herein. For instance, input device 126 may be programmed to turn on home entertainment system 110 and to tune video receiver 112 to a channel.

Figure 1 illustrates a signal recorder 130, which is capable of receiving video and/or audio data and recording the data on a storage medium. Video signals are transmitted to display device 114 and/or signal recorder 130 by video image links 132a and 132b, respectively, examples of which include a radio-frequency ("RF") link, an S-video link, a composite link, or any other equivalent form of video image link. Similarly, audio links 134a and 134b transmit audio data from video receiver 112 to audio system 116 and/or to signal recorder 130, respectively.

The operation of video receiver 112 is controlled by a central processing unit ("CPU"), illustrated as processing unit 136, which is coupled to an application-specific integrated circuit ("ASIC") 138 via system bus 140 and uses computer-executable instructions implemented in software and/or hardwired logic circuitry. Processing unit 136 and ASIC 138 are also coupled via a system bus 140 to various other system components, including system memory 142, mass storage interface 144, user interface 124 and signal input 118. Processing unit 136 may execute software designed to implement features of video receiver 112 including features of the present invention.

ASIC 138 contains circuitry that is used to implement certain functions of video receiver 112. Instructions, data, and other program modules necessary for the operation of processing unit 136 and necessary for the operation of the ASIC 138 may be stored in mass storage device 150 and/or system memory 142, which includes read-only memory ("ROM") 146 and random-access memory ("RAM") 148. Mass storage device 150 is coupled to mass storage interface 144, and may be, for example, a magnetic hard disk 152.

Any desired computer-readable instructions or data, including application programs 154, other program modules 156, and an electronic programming guide ("EPG") 158, which specifies the broadcast times and channels of programs can be stored in mass storage device 150.

Mass storage device 150 may also be used to record video data 153, in which case, video receiver 112 performs the functions of a digital video recorder. Digital video data may be received by home entertainment system 110 from a variety of sources including signal source 120, remote computer 160, video game 168, input device 126 and the Internet.

In the embodiment where video receiver 112 is associated with the Internet, video 112 may communicate with remote computer 160 via wide area network ("WAN") 162 using a variety of techniques, including interposing serial port interface 164 between the system bus 140 and a modem 166, using a wireless link, or other means for establishing communications over a WAN that may be internal or external to video receiver 112. While serial port interface 164 may be utilized to connect a modem 166 for communicating across a WAN, serial port interface may also be utilized to connect other consumer electronic devices, such as video game 168, and/or various input devices, such as a keyboard (not shown) or joystick (not shown), to video receiver 112.

Referring now to signal input 118, if the signal on programming input line 122 includes multiple channels, a tuner 170 included in signal input 118 tunes to a selected channel in the signal. Multiple tuners 170 can be used to provide enhanced viewing features, such as picture-in-picture, recording one channel while viewing another, and recording a plurality of channels simultaneously. A signal decoder 172 may convert video data from an analog format to a digital format, from a digital format to an analog format, or convert between varying digital formats, in the event that ASIC 138 and tuner 170 employ different formats. Video decoder 172 may also decode video data from a compressed video format (e.g. MPEG). In embodiments where the video receiver 112 includes multiple tuners 170, video receiver 112 may also include multiple signal decoders 172 to perform the operations disclosed herein.

While Figure 1 and the corresponding discussion above provide a general description of a suitable environment in which the invention may be implemented, it will be appreciated that the features of the present invention disclosed herein may be practiced in association with a variety of different system configurations.

Figure 2 depicts an example delivery system 210 that is capable of delivering content such as television programming and web pages from one or more remote sources to one or more video receivers over one or more networks. In addition, the delivery system 210 is capable of delivering video advertisements to the video receivers. For example, Figure 2 illustrates a general flow of information (e.g., web pages, television programming, and video advertisements) from the signal source 120, through a network 216, and to the video receiver 112.

If the content is television programming, signal source 120 may represent a television broadcast provider, satellite television provider, cable television provider, and the like. The signal source 120 may also represent a server computer system that receives the television broadcasting and forwards the television broadcasting to the video receiver 112. If the content is a Web page or other network service, signal source 120 may be the origin server for the Web page, or perhaps an intermediary server computer system that receives and forwards the Web pages or other network resources to the user. It may be that signal source 120 acts as a clearinghouse for both television programming and Web pages and forwards such diverse content to the video receiver 112.

Generally, signal source 120 is capable of generating or forwarding multiple Moving Pictures Experts Group (MPEG) streams of audio and/or video data (referred to generally as "video data"). Such video data may be, for example, digital television programming, video advertisements or any other video data. The video data is transmitted to video receiver 112 over those MPEG streams designated by reference numerals 1 through n. These MPEG streams 1 through n may use a variety of standards and formats such as MPEG-1, MPEG-2, and MPEG-4 and may be received, for example, at the programming input line 122 described above with reference to Figure 1.

In addition to generating various MPEG streams 1-n, signal source 120 may generate and deliver one or more data streams, designated by numerals 1-n, to video receiver 112. Such data streams 1-n can include web pages or other network resources, or enhanced content (such as Advanced Television Enhancement Forum (ATVEF)) content that is synchronized with the broadcast programming delivered via MPEG streams 1-n to video receiver 112. Although the MPEG streams 1-n are illustrated separate from the data streams 1-n, the data streams 1-n may be delivered within the MPEG streams. For example, the MPEG standard provides for transport packets that may be used to transport data within an MPEG stream.

The signal source 120 may use the data streams to supply data regarding the video advertisements that may potentially be shown on the video receiver. For example, such video advertisement data may include a list of video advertisements and a schedule of video advertisements that may be displayed to the viewer during a particular day, week, month, or the like. The data may also include enhanced content such as triggers that allow for proper timing when displaying the video advertisement. In addition to video advertisement data, the signal source 120 may use the data streams 1-n to deliver targeting instructions that the video receiver 112 should follow when determining what video advertisements to show, and when.

The video advertisement data and the targeting data may be delivered to the video receiver 112 in a variety of manners. The particular manner in which the video advertisement data is delivered to the video receiver is not important to the invention. In one embodiment, the signal source 120 may deliver the video advertisement data in a carousel-type manner, in which sequences of video advertisements are provided one after another to the video receiver 112. However, other manners for delivering video advertisement data to video receiver 112 can be identified by one skilled in the art in light of the teaching contained herein.

Communicating with signal source 120 is an enhanced content source 214. Enhanced content source 214, in this illustrative configuration, generates the enhanced program content deliverable with the broadcast content created by signal source 120. As illustrated, enhanced content source 214 is configured to insert the enhanced program content into one of the MPEG streams 1-n carrying the television programming and video advertising. Optionally, enhanced content source 214 may insert the enhanced program content into one of the data streams 1-n associated with the MPEG streams 1-n and deliverable to video receiver 112.

Although enhanced content source 214 is depicted as being separate from signal source 120, one skilled in the art will understand that enhanced content source 214 may be incorporated within signal source 120. In this manner, a content provider may transmit the content (e.g., television programming and/or web pages) and insert the enhanced program content (e.g., video advertisements, triggers, and the like) within one or more of the MPEG streams 1-n or data streams 1-n deliverable to video receiver 112. Further, while the discussion contained herein specifies that signal source 120 supplies data relating to the video advertisements, it may be appreciated by one skilled in the art that enhanced content source 214, either alone or in combination with signal source 120, may deliver such data. In addition, signal source 120 and/or enhanced content source 214 may supply other information such as banner advertisements and associated delivery schedules in a similar manner as described above for video advertisements.

As stated above, enhanced content module 214 generates enhanced content for the broadcast programming or network resources generated by signal source 120. Such enhanced content may include one or more announcements, zero or more triggers, and one or more packages that define content for an enhanced programming experience.

As understood by one skilled in the art, each announcement of the enhanced content notifies video receiver 112 of the availability of an enhanced programming experience, whether such an experience includes streaming video, static web pages, advertisements, and the like. The announcement defines the MPEG stream 1-n at which the enhanced program content is available. For instance, broadcast programming may include enhanced content in the out-of-band portion of the MPEG stream 1-n that notifies video receiver 112 of the availability of a banner advertisement and/or a video advertisement upon MPEG stream 3.

As further understood by one skilled in the art, subsequent to delivery of the announcement to video receiver 112, zero or more triggers are delivered to video receiver 112 at various times to initiate either delivery of the enhanced program content or as a notification to the viewer of the availability of such enhanced program content. Each trigger includes and defines the name of the data to be sent as part of the enhanced programming experience and the communication protocol, such as transport A protocol, transport B protocol, or a combination thereof used to deliver the enhanced programming. The trigger may deliver enhanced program content such as video advertisements or banner advertisements to the viewer automatically.

The zero or more triggers can have different configurations and cause video receiver 112 to perform various different functions. For instance, one trigger may take the form of a start trigger that initiates or begins delivery of the enhance programming content such as a video advertisement. Another trigger may be a stop trigger that ceases or stops delivery of the video advertisement. Additionally, other triggers can define (i) the amount of time until a video advertisement is completed, (ii) time until the next available video advertisement in a looped group of advertisement is to be viewed, (ii) information about a video advertisement currently being viewer, such as video content type, (iv) information about a video advertisement to be viewed in the future, and the like.

More specifically, such enhanced content may include video advertisement start and stop times, content defining the length of the video advertisement, one or more identifiers defining the quantity of the video advertisement viewed and remaining to be viewed at any given time that local system 118 access the available video advertisements deliverable upon one or more MPEG streams 1-n and/or data streams 1-n, the time when a subsequent video advertisement is to begin within a sequence of video advertisements, video content identifiers defining the particular advertising type of the video advertisement, such as whether the video advertisement relates to sports, automobiles, clothing, travel, broadcast programming, and the like. Further, each video advertisement may include a video advertisement title, the advertiser's name, and the like.

As stated above and expanded on below, the principles of the present invention allow for the criteria for decision making on whether or not to display a video advertisement to be remotely set. In order to accomplish this, the enhanced content source 214 may also include instructions that direct the video receiver 112 on how to use localized state and user behavior information to make the determination on whether or not to display the video advertisement. These instructions may follow the format of a scripting language and may be included in one or more of MPEG streams 1 through n or data streams 1 through n.

The broadcast programming or other content and optionally the enhanced program content are deliverable to video receiver 112 via network 216. Network 216 may represent one of a variety of networks upon which the broadcast programming and enhanced program content may be delivered to video receiver 112. For example, network 216 may represent existing cable television infrastructure, satellite network, over-the-air broadcasting network, standard telephone lines, direct dial connection, and the like.

Now that an example receiver and example system environment that may be used to implement the present invention have been described with respect to Figure 1 and Figure 2, respectively, the operation of the invention will be described below with respect to Figures 3 through 5.

Figure 3 depicts an exemplary display screen that may be presented to the viewer through display device 114. Surrounding the display screen is a schematic representation of the video advertisements and banner advertisements that may be displayed to the viewer, the advertisements being delivered by the signal source 120. As illustrated, display screen 310 includes a primary content window 312, which may be television programming or network resources such as Web pages. Display screen 310 also includes navigation buttons 314 that allow the user to navigate through network resources should the primary content window 312 display a network resource compatible with navigation. Display screen 310 also includes an advertisement window 316 in which video advertisements or banner advertisements may be displayed.

Delivery of advertisements 318a-318n and 320a-320n to advertisement window 316 may be via one or more MPEG streams 1-n and/or data streams 1-n. Alternatively or in addition, if the set-top box has sufficient mass storage capacity, such banner and/or video advertisements 318a-318n and 320a-320n may be cached within system memory 142 and/or stored within mass storage device 150 (Figure 1) for retrieval as needed. Such stored banner and/or video advertisements 318a-318n and 320a-320n can include banner and/or video advertisements 318a-318n and 320a-320n that were initially received via MPEG streams 1-n and/or data streams 1-n or can be other banner and/or video advertisements 318a-318n and 320a-320n that were stored in mass storage device 150 in some other manner known to one skilled in the art, such as during manufacture of the local system or installation of the local system. If a video advertisement is unavailable for immediate display, a related banner advertisement may be displayed in the advertisement window 316 until the video advertisement is ready for display. The method for switching between banner advertisements and video advertisements is described in detailed in the related commonly-owned co-pending United States patent application serial number (attorney docket number 14531.96), filed on the same date herewith, and entitled "Advertising Using a Combination of Video and Banner Advertisements," which application is incorporated herein by reference in its entirety.

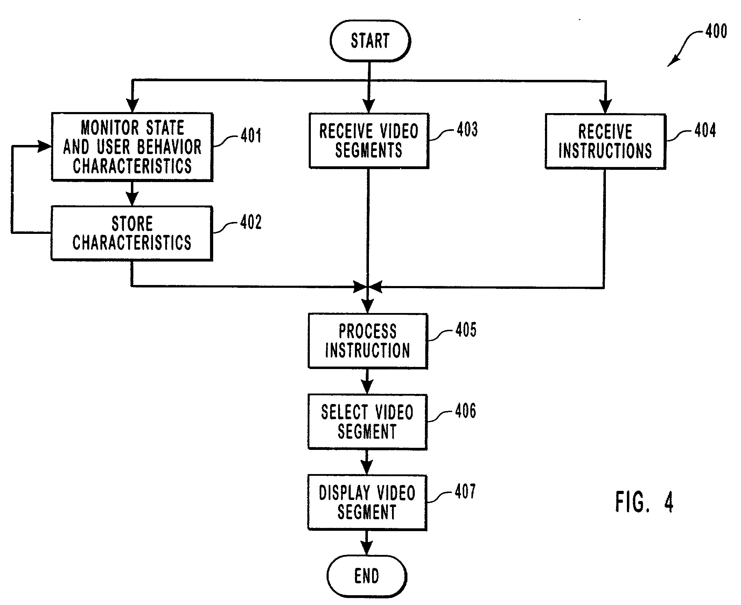

Figure 4 illustrates a flowchart of a method 400 for targeting advertising in accordance with the present invention. The method may be performed by a video receiver such as the video receiver 112 described above.

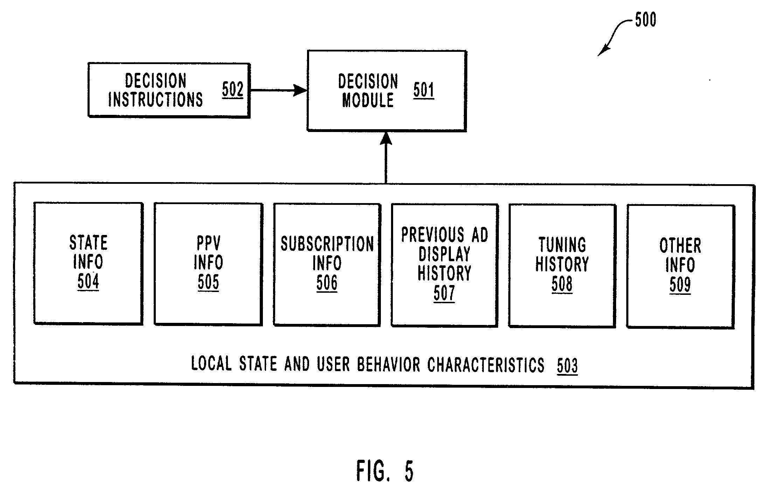

The video receiver 112 monitors state and user behavior characteristics associated with the video receiver 112 (act 401). For example, referring to Figure 5, local state and user behavior characteristics 503 include state information 504, pay per view information 505, subscription information 506, previous advertisement display history 507, tuning history 508 as well as other information 509. The state and user behavior characteristics generally include information that is relevant to a determination of whether or not to display a video advertisement.

State information 504 may include whether or not the display device 112 is on and capable of displaying the screen 310 described above with reference to Figure 3. State information 504 may also include an identification of a television program or network resource current being viewed in the primary content window 312. For example, an advertiser may want to display a video advertisement when the user navigates to their corresponding web site.

The pay per view information 505 may include historical information about pay per view purchases. For example, an advertiser may elect not to display an advertisement for a pay per view service if the pay per view information 505 indicates that the user has not in the last year ordered any pay per view services. Also, a pay per view service might not be advertised to someone who has already order a service. On the other hand, if the pay per view information 505 indicates a propensity to order championship boxing match coverage, then a video advertisement touting a future boxing match might be profitable.

Subscription information 506 may include, for example, whether or not the user has subscribed to certain premium channels or services. If an advertiser is offering a certain premium channel, for example, the advertiser may not want the video advertisement to be displayed to someone who has already subscribed to that service. Instead, a more promising video advertisement may be selected for the viewer.

Previous advertisement display history 507 may include an identifier corresponding to video advertisements previously displayed along with a time that the advertisement was last displayed. It may not be desirable to display a video advertisement to a viewer that has already recently seen the video advertisement. Thus, the display decision may be based on how recently the video advertisement was last shown. The advertisement display history 507 may also describe how many times the advertisement was displayed in a given period. Thus, the display decision may be to display if the video advertisement has not already been displayed a given number of times in a given period.

Tuning history 508 includes information about the time-wise tuning behavior of the user. From this information, the video receiver may derive the interests of the viewer on a time-wise basis. Thus, in the mornings, the children may be watching cartoons or other children's television or perhaps navigate to web sites appealing to children. In the afternoon, the maid may be watching soap operas as she works. In the evening, the parents in the family may watch the evening news or perhaps navigate to web sites appealing to adults. Thus, the video receiver may display video advertisement focused on children during the mornings, video advertisements focused on the maid in the afternoon, and video advertisements focused on the parents in the evening. If children tended to watch television during then evenings, and the parents watched television during the mornings, then the video receiver would tend to display children oriented advertising in the evening, and adult oriented advertising in the morning.

Other information 509 is illustrated to emphasize that this is a non-exhaustive listing of localized state and user behavior characteristics that might be relevant to a determination on whether to show a video advertisement or not.

By monitoring state and user characteristics, the video receiver may generate and locally store the characteristics (act 402). The arrow from act 402 back to act 401 is provided to emphasize that the localized state and user behavior characteristics may be constantly monitored with the appropriate stored parameters changing as the monitored state and user behavior characteristics change. The video receiver 112 also receives the video advertisements (act 403) and the targeting instructions (act 404) from the MPEG streams and/or data streams, for example, as described above.

The video receiver 112 then processes the received instructions (act 405) to thereby select the video advertisements that are to be displayed (act 406). Then the selected video advertisements are displayed (act 407). For example, referring to Figure 5, decision module 501 receives instructions 502, and processes instructions 502 to select a video advertisement to display using the local state and user behavior characteristics 503. Thus, the principles of the present invention allow remote entities to control the decision making process on whether or not to display an advertisement by conditioning the display based on locally stored characteristics. Thus, the remote entity not control the conditions for display based on information relevant to an individual user. In addition, such control is facilitated without necessarily requiring any disclosure of such information to the remote entity, thereby preserving the privacy of the users associated with the video receiver 112.

Although the video segments selected and displayed are described as being video advertisements, the principles of the present invention may be applied to any video segment, regardless of whether it is an advertisement or not. In addition, the above describes the selection and display of video advertisement using the received instructions. However, the selection and display of banner advertisements may also be accomplished using the above described principles.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes, which come within the meaning and range of equivalency of the claims, are to be embraced within their scope.

## Claims

1. A method of targeting a plurality of video segments in a video receiver based on local information accessible to the video receiver and based on remotely issued instructions, the method for use in a video receiver that is coupled to a display device, the video receiver configured to receive a stream that includes the plurality of video segments, the method comprising:
monitoring state and user behavior characteristics associated with the video receiver;
locally storing the characteristics;
receiving a plurality of video segments from the stream;
receiving executable instructions from the stream, the executable instructions configured to cause the video receiver to select a video segment from among the plurality of video segments based on the locally stored characteristics when the executable instructions are processed by a processor;
processing the executable instructions to cause the video receiver to select the video segment; and
causing the video segment to be displayed on the display device.

2. The method according to Claim 1, wherein:
processing the executable instructions to cause the video receiver to select the video segment comprises processing the executable instructions to cause the video receiver to select a video advertisement; and
causing the video segment to be displayed on the display device comprises causing the video advertisement to be displayed on the display device.

3. The method according to Claim 1, wherein:
causing the video segment to be displayed on the display device comprises causing the video segment to be displayed on the display device in a window.

4. The method according to Claim 3, further comprising:
displaying material outside of the window.

5. The method according to Claim 4, wherein:
displaying material outside of the window comprises at least one of:
displaying television programming outside of the window;
displaying network resources outside of the window; and
displaying Web content outside of the window.

6. The method according to Claim 1, further comprising:
causing a still picture to be displayed on the display device when the video segment is not being displayed on the display device.

7. The method according to Claim 6, further comprising:
receiving the still picture from the stream.

8. The method according to Claim 6, wherein:
causing a still picture to be displayed on the display device in the window when the video segment is not being displayed on the display device comprises causing a banner advertisement to be displayed on the display device in the window when the video segment is not being displayed on the display device.

9. The method according to Claim 6, wherein the executable instructions are first executable instructions, the method further comprising:
receiving second executable instructions from the video stream, the second executable instructions configured to cause the video receiver to select the still picture from among a plurality of still pictures based on the locally stored characteristics when the second executable instructions are processed by a processor; and
processing the second executable instructions to cause the video receiver to select the still picture.

10. The method according to one of the Claims 1 to 9, further comprising:
caching the plurality of video segments as they are received.

11. The method according to Claim 10, further comprising:
releasing the cache memory associated with a particular video segment if the video receiver determines that the particular video segment is not to be displayed.

12. The method according to one of the Claims 1 to 11, wherein causing the video segment to be displayed on the display device comprises:
causing the video segment to be displayed as the video segment is being received from the stream, wherein the executable instructions contain a trigger that coordinates the start of display of the video segment with the time that the video segment is received by the video receiver.

13. The method according to one of the Claims 1 to 12, wherein receiving a plurality of video segments from the video stream comprises:
receiving the plurality of video segments from a plurality of video streams; and
switching display between the plurality of video streams based on the executable instructions.

14. The method according to one of the Claims 1 to 13, wherein the video stream is a unidirectional video stream.

15. The method according to one of the Claims 1 to 14, wherein the locally stored characteristics include at least one of:
channel subscription information; and
historical information about channels tuned to.

16. The method according to one of the Claims 1 to 15, wherein the locally stored information includes at least one of:
historical information about pay per view purchases; and
historical information about advertisements displayed.

17. The method according to Claim 16, wherein the historical information about pay per view purchases includes the identification of the last pay per view purchase.

18. The method according to Claim 16, wherein the historical information about advertisements displayed comprises at least one of:
an identifier identifying at least some of the advertisements previously displayed; and
a time that the corresponding advertisement was last displayed.

19. The method according to one of the Claims 1 to 18, wherein the video receiver locally stores the characteristics without revealing the characteristics outside of the video receiver.

20. A computer program product for use in a video receiver that is coupled to a display device, the video receiver configured to receive a video stream that includes a plurality of video segments, the computer program product for implementing a method of the video receiver targeting the plurality of video segments based on local information accessible to the video receiver and based on remotely issued instructions, the computer program product comprising a computer-readable medium having stored thereon computer-executable instructions for performing, when run on a computer:
monitoring state and user behavior characteristics associated with the video receiver;
causing the characteristics to be locally stored;
detecting the receipt of a plurality of video segment from the video stream;
processing instructions received from the video stream, the instructions configured to cause the video receiver to select a video segment from among the plurality of video segments based on the locally stored characteristics when the executable instructions are processed by a processor; and
causing the video segment to be displayed on the display device.

21. The computer program product according to Claim 20, wherein the computer-readable medium comprises at least one physical storage medium.

22. The computer program product according to Claim 20 or 21, wherein the computer-readable medium further has stored thereon computer-executable instructions for performing all the steps of the method according to any one of Claims 2 to 19.
